# EUROPEAN PATENT APPLICATION

(11) **EP 1 418 494 A2**
(43) Date of publication of application: **12.05.2004**
(21) Application number: 03017476.7
(22) Date of filing: 01.08.2003
(51) Int. Cl.: G06F 3/06

(54) **Disc controller and controlling method**

(30) Priority: 11.11.2002 JP 2002326598
(71) Applicant: Hitachi, Ltd., Chiyoda-ku, Tokyo 101-8010 (JP)
(72) Inventor: Takata, Yutaka, Tokyo 100-8220 (JP); Kobayashi, Naotaka, Tokyo 100-8220 (JP); Ogasawara, Hiroshi, Tokyo 100-8220 (JP)
(74) Representative: Strehl Schübel-Hopf & Partner

(57) **Abstract**

Disclosed is a disc controller, which includes a network controlling unit for receiving a data input/output request sent from an external device through a network, and a disc controlling unit formed in the same circuit board in which the network controlling unit is formed, the disc controlling unit coupling the network controlling unit thereto by an internal bus provided in the circuit board. In the disc controller, the disc controlling unit is configured to receive a command sent from the network controlling unit through the internal bus and execute a data input/output for a disc drive in response to the command.

## Description

### 1. Field of the Invention

The present invention relates to a disc controller and a controlling method of the same.

### 2. Descriptions of the Related Art

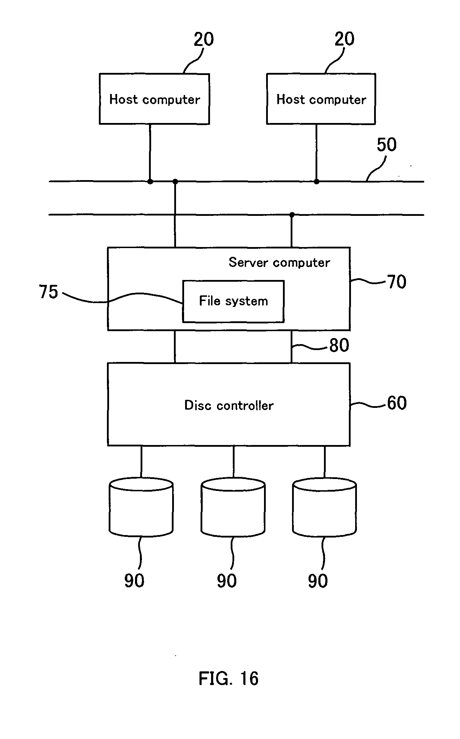

A typical configuration of a storage system constituted by use of SAN (Storage Area Network) is illustrated in Fig. 16. A host computer 20, which is an information processing unit trying to access a storage area provided by a disc controller 60, accesses a server computer 70 through a LAN (Local Area Network) 50. The server computer 70 and the disc controller 60 are coupled by a Fibre Channel 80.

A file system 75 operates in the server computer 70. A data input/output request is sent to the server computer 70 from the host computer 20 by a file specification. Based on the data input/output request, a file system 75 generates an I/O command in accordance with SCSI standards, and sends the generated I/O command to the disc controller 60 through the Fibre Channel 80. The disc controller 60 allows a disc drive 90 to input/output data thereto/therefrom depending on the I/O command sent through the Fibre Channel 80. The disc controller 60 sends the data read out from the disc drive 90, a processing completion report and the like to the server computer 70, and the server computer 70 transfers the host computer 20 about the read out data and the processing completion report.

Incidentally, communications through the Fibre Channel 80 may be an obstacle against bringing out potential performance and ability of hardware of the server computer 70 and the disc controller 60. To perform the communication with the Fibre Channel 80, a circuit, which is for a protocol conversion between a communication performed between a CPU and a memory through an internal bus, the CPU and the memory operating in the disc controller 60 and the server computer 70, and a communication using the Fibre Channel 80, is necessary, and this leads to a complicated apparatus and an increase in cost. An overhead required for processing of this protocol conversion causes a performance degradation of the storage system.

### SUMMARY OF THE INVENTION

The present invention was made in view of such circumstances, and an object of the present invention is to provide a disc controller and a controlling method of the same.

To achieve the object, a disc controller according to the present invention which includes a network controlling unit for receiving a data input/output request sent from an external device through a network, and a disc controlling unit formed in the same circuit board in which the network controlling unit is formed, the disc controlling unit coupled to the network controlling unit by an internal bus provided in the circuit board. Herein, the disc controlling unit receives a command sent from the network controlling unit through the internal bus and executes a data input/output for a disc drive in response to the command, the network controlling unit sends the command, forwhich a plurality of addresses are set, to the disc controlling unit, and the disc controlling unit receives the command and executes data input/output corresponding to each of the addresses set in this command for the disc drive.

Features and objects of the present invention other than the above will become clear by reading the description of the present specification with reference to the accompanying drawings.

According to the present invention, a higher performance disc controller and disc controlling method will be provided.

### BRIEF DESCRIPTION OF THE DRAWINGS

For a more complete understanding of the present invention and the advantages thereof, reference is nowmade to the following description taken in conjunction with the accompanying drawings wherein:
Fig. 1 is a block diagram illustrating a configuration of a storage system according to an embodiment of the present invention;
Fig. 2 is an illustration for explaining a way of storing a data input/output request in a receiving buffer of a memory for a network data according to the embodiment of the present invention;
Fig. 3 is a diagram illustrating file management information according to the embodiment of the present invention;
Fig. 4 is an illustration for explaining a way of storing the file management information in a control memory according to the embodiment of the present invention;
Fig. 5 is an illustration for explaining a mechanism in which an I/O command is generated based on the data input/output request according to the embodiment of the present invention;
Fig. 6 is an illustration for explaining a state in which the generated I/O command is being stored in the control memory according to the embodiment of the present invention;
Fig. 7 is a flowchart for explaining a processing in which a network controlling unit generates the I/O command based on the data input/output request according to the embodiment of the present invention;
Figs. 8A and 8B illustrate a state in which the I/O command is being generated in the control memory according to the embodiment of the present invention;
Fig. 9 is a flowchart for explaining an execution of the I /O command according to the embodiment of the present invention;
Fig. 10 is a block diagram illustrating a configuration of the storage system constituted by use of a disc controlling unit in which a plurality of circuit boards are mounted according to an embodiment of the present invention;
Fig. 11 is a flowchart for explaining a processing of the network controlling unit in the case where the network controlling unit in one circuit board operates as a requesting side of a heartbeat message for the network controlling unit in another circuit board according to an embodiment of the present invention;
Fig. 12 is a flowchart for explaining the processing of the network controlling unit in the case where the network controlling unit in one circuit board receives the heartbeat message or a message from a fault monitoring unit according to an embodiment of the present invention;
Fig. 13 is a flowchart for explaining the processing of a fault controlling unit according to an embodiment of the present invention;
Fig. 14 is a block diagram illustrating a circuit board in which the plurality of network controlling units and disc controlling units are formed according to an embodiment of the present invention;
Fig. 15 is an illustration for explaining a mechanism of a fault detection according to an embodiment of the present invention; and
Fig. 16 is a block diagram illustrating a configuration of a conventional typical storage system.

### DETAILED DESCRIPTION OF THE INVENTION

At least the following matters will be made clear by the explanation in the present specification and the description of the accompanying drawings.

### (Summary of Disclosure)

In the above described invention, a network controlling unit provides a function that a network controlling unit receives a data input/output request sent from a host computer through a LAN in accordance with a predetermined network protocol, the function having been exerted by the server computer in the conventional storage system. The network controlling unit sometimes includes a function of a system management including virus checking, SNMP (Simple Network Management Protocol), a cluster management, an access limitation to a file and a time management. Furthermore, the disc controlling unit provides a function of the disc controller in the conventional storage system, in which the disc controlling unit receives a command from a server computer through a SAN and inputs/outputs data to/from a disc drive in response to this command. Now that the meaning of data input/output includes any of writing data to a disc drive and reading out data from the disc drive. The command corresponds to, for example, a I/O command which is described later.

In this disc controller, the network controlling unit and the disc controlling unit are formed in the same circuit board, and are coupled to each other by an internal bus such as PCI (Peripheral Component Interconnect) bus provided in the circuit board. Thus, the network controlling unit and the disc controlling unit can execute a highly flexible transmission to each other without restriction due to difference in a protocol.

Moreover, as above described, the network controlling unit sends one command, for which a plurality of addresses are set, to the disc controlling unit, and the disc controlling unit can receive the command to input/output data corresponding to each of the addresses set for the command to/from the disc drive.

Accordingly, in the conventional Fibre Channel transmission, a server computer, which has received a certain data input/output request, needs to send a plurality of commands to the disc controlling unit, whereas in this embodiment, the above function can be executed by sending only one command, whereby an overhead required for a transmission is reduced, and the performance of the storage system can be improved.

Additionally, by coupling the network controlling unit and the disc controlling unit through an internal bus provided in a circuit board, a circuit for converting between the above Fibre Channel transmission and an internal bus transmission is not necessary, thus a productivity of the storage system can be improved, and cost thereof can be reduced.

Moreover, when the disc controlling unit can execute a parallel processing relating to data input/output to/from the disc drive, the processing relating to data input/output corresponding to a plurality of addresses can be in parallel executed by use of one command, thus performance of a storage system can be improved. Further, the network controlling unit and the disc controlling unit are formed in the same circuit board, whereby manufacturing steps of the storage system are simplified compared to the case where the network controlling unit and the disc controlling unit are formed in separate circuit boards.

Incidentally, in the network controlling unit, a file system sometimes operates, which applies the mechanism for receiving a data input/output request designating data inputted/outputted to/from the disc drive by use of a file name. In this case, the network controlling unit generates an address in a storage location of data on the disc drive which corresponds to the file name set by the data input/output request, and sets this address to a command.

A disc controller according to one aspect of the present invention, includes a network controlling unit for receiving a data input/output request sent from an external device through a network and a disc controlling unit formed in the same circuit board in which the network controlling unit is formed, the disc controlling unit coupling the network controlling unit thereto by an internal bus provided in the circuit board. Herein, the disc controlling unit receives a command sent from the network controlling unit and executes a data input/output for a disc drive in response to this command, has a memory accessible by both the network controlling unit and the disc controlling unit shared in the circuit board. The network controlling unit and the disc controlling unit update, at a predetermined timing, operation state information indicating each of operation states of the network controlling unit and the disc controlling unit, which is stored in the memory. An occurrence of faults in the network controlling unit and disc controlling unit is detected based on the operation state information.

Herein, the network controlling unit examines the operation state of the disc controlling unit which is a sending destination of the command based on the operation state information when the network controlling unit can not acquire a receipt notification concerning the command sent to the disc controlling unit, and determines depending on an examine result thereof whether the command should be sent to the disc controlling unit again.

Moreover, the network controlling unit investigates the operation state of the disc controlling unit which is a sending destination of the command based on the operation state information when the network controlling unit can not acquire a receipt notification concerning the command sent to the disc controlling unit. When the network controlling unit judges that the disc controlling unit is not normally operating, the network controlling unit can send the command to at least one of other disc controlling units. Additionally, a user interface for notifying the occurrence of the faults may be provided when the occurrence of the faults is detected. Furthermore, when the occurrence of the faults is detected, a signal for requesting a restart to one of the network controlling unit and the disc controlling unit may be sent. Thus, a fail-over can be realized.

As above described, the network controlling unit and the dick controlling unit are formed in the same circuit board, and a memory accessible by both the network controlling unit and the disc controlling unit in a sharing manner is provided in the circuit board, whereby the mechanism for a fault detection can be constituted, which stores the operation state information of the network controlling unit and the dick controlling unit in the memory, and detects the faults thereof.

In above configuration, the mechanism for updating the operation state relating to the network controlling unit and the dick controlling unit, referring the operation state information, and sending the restart signal is operated by a high speed transmission by use of a highly reliable internal bus. Thus, the performance and reliability of the storage system can be improved.

The network controlling unit can also acquire, from the operation state information, an operation state of the disc controlling unit which is a sending destination of the command when the network controlling unit sends the command to the disc controlling unit, and determines depending on the acquired operation state whether the command should be sent to the disc controlling unit.

A disc controller according to another aspect of the present invention, includes a network controlling unit for receiving a data input/output request sent from an external device through a network, and a disc controlling unit formed in the same circuit board in which the network controlling unit is formed, the disc controlling unit coupling the network controlling unit thereto by an internal bus provided in the circuit board. Herein, the disc controlling unit receives a command sent from the network controlling unit through the internal bus and executes a data input/output for a disc drive in response to this command, has an interface for connecting a backup device thereto. The network controlling unit receives a backup request concerning data stored in the disc drive from the external device and sends a backup command to the disc controlling unit. The disc controlling unit sends the backup command concerning the data of the disc drive to the backup device upon receipt of the backup command.

Conventionally, it is general that the backup device has a structure that the backup device is coupled to a server computer through a Fibre Channel. In this case, the server computer is required to perform a data transfer from a disc controller to the backup device through a Fibre Channel. However, in the structure that the network controlling unit and the disc controlling unit are coupled by the internal bus as in this embodiment, it is possible to start the backup by the disc controlling unit only by sending the command for instructing the backup from the network controlling unit to the disc controlling unit. In this structure, the data to be backed up is directly transferred from the disc controlling unit to the backup device, and a load imposed to the network controlling unit during the backup is significantly reduced. Furthermore, since the communication is performed through the internal bus, high speed processing of the disc controller can be achieved.

A disc controller according to still another aspect of the present invention, includes a network controlling unit for receiving a data input/output request sent from an external device through a network; and a disc controlling unit formed in the same circuit board in which the network controlling unit is formed, the disc controlling unit coupling the network controlling unit thereto by an internal bus provided in the circuit board. Herein, in the disc controller which the disc controlling unit receives a command sent from the network controlling unit through the internal bus and executes a data input/output for a disc drive in response to this command, the disc controller includes a plurality of circuit boards coupled so as to be capable of communicating with each other. Either circuit board detects an occurrence of faults of one of the other circuit boards by exchanging a heartbeat message among the circuit boards. One circuit board different from the circuit board causing the faults stands for a processing of the circuit board causing the faults when the occurrence of the faults of the circuit board is detected.

As described above, in the structure which has a plurality of circuit boards in which the network controlling unit and the disc controlling unit are formed, by exchanging the heartbeat massage among the circuit boards and one of the other circuit boards different from the circuit board causing the faults stands for a processing of the circuit board causing the faults when the occurrence of the faults of one circuit board is detected, the method of the fail-over can be realized, and the reliability of the storage system can be improved.

### (System Structure)

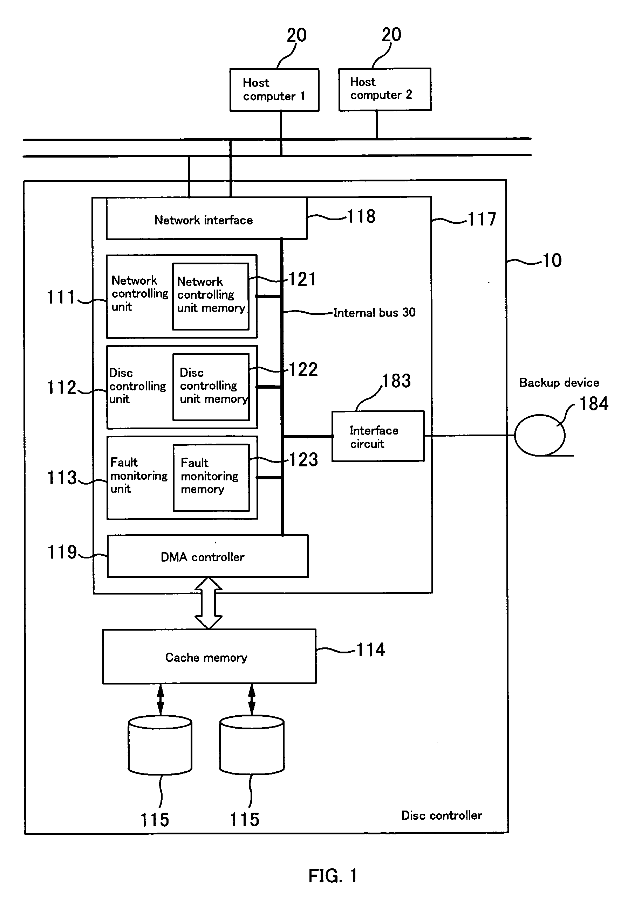

A structure of the storage system described as an embodiment of the present invention is illustrated in Fig. 1.

One or more host computers 2 0 are coupled to a disc controller 10 through a LAN 50. The host computer 20 is a personal computer, a work station, a general purpose computer and the like.

The disc controller 10 is configured by including a network controlling unit 111, a disc controlling unit 112, a fault monitoring unit 113, a cache memory 114, one or more disc drives 115 and the like. The disc drives 115 may be accommodated in a different box from that in which the disc controller 10 is accommodated, and coupled to the disc controller 10 through communication means.

In the disc controller 10, the network controlling unit 111, the disc controlling unit 112 and the fault monitoring unit 113 are formed on the same single circuit board 117. On this circuit board 117, formed are a network interface 118, which is a circuit for realizing a function corresponding to a LAN adapter or a NIC (Internet Interface Card), and a DMA (Direct Memory Access) controller 119.

These circuits formed on the circuit board 117 are coupled to each other by an internal bus 30 such as a PCI (Peripheral Component Interconnect) bus so that these circuits are able to communicate with each other.

The network controlling unit 111 includes a CPU, a memory (hereinafter, referred to as a network controlling unit memory) 121 and the like. An operating system operates in the network controlling unit 111, and various programs such as a program for executing a communication in response to a network protocol such as TCP/IP® and NFS® (Network File System) operate on this operating system.

The disc controlling unit 112 includes a CPU, a memory (hereinafter, referred to as a disc controlling unit memory) 122, a disc drive controlling circuit and the like. Furthermore, the disc controlling unit 112 sometimes has a function to control the disc drive 115 by a RAID (Redundant Array of Inexpensive Discs) system.

The fault monitoring unit 113 includes a CPU, a memory (hereinafter, referred to as a fault monitoring unit memory) 123 and the like.

The disc controller 10 includes an interface circuit 183 for coupling a backup device 184 thereto on the circuit board 117 or another circuit board. Note that the interface circuit 183 is coupled to the internal bus 30. As the backup device 184 coupled to the interface circuit 183, there are a DAT tape drive, a DVD-RAM, an MO, or a CD-R drive, a disc drive, a cassette tape recorder and the like.

### (Data Input/Output Request)

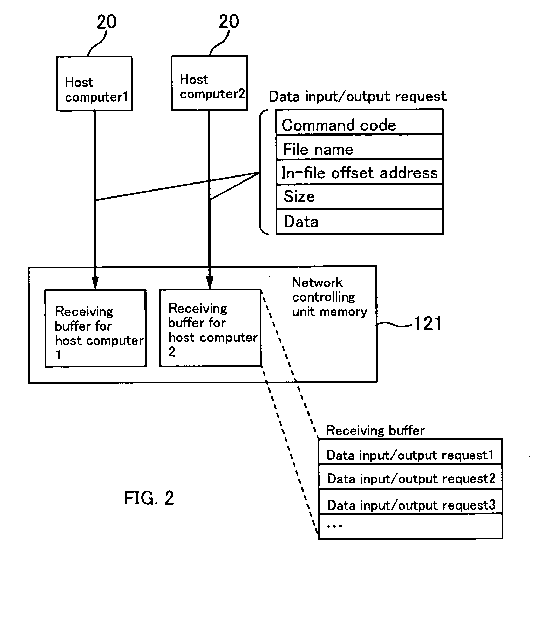

Upon receipt of the data input/output request sent from the host computer 20 through the LAN 50, the network controlling unit 111 stores the data input/output request in a receiving buffer allocated in the network controlling unit memory 121 as illustrated in Fig. 2. Note that though different receiving buffers are prepared for the respective host computers 20 in Fig. 2, a common receiving buffer may be prepared for the plurality of host computers 20.

The data input/output request sent from the host computer 20 contains information relating to a command code for identifying as to whether the data input/output request is a data write request or a data read request, a file name, an in-file offset address and a data size for specifying a location of data in a file, which is to be processed, and write data, which is set when the data input/output request is the data write request.

The network controlling unit 111 generates an I/O command based on the data input/output request stored in the receiving buffer, and sends the generated I/O command to the disc controlling unit 112 through the internal bus 30. When the disc controlling unit 112 receives the I/O command from the network controlling unit 111, the disc controlling unit 112 executes the data input/output, which corresponds to the I/O command, for the disc drive 115.

### (File Management Information)

The I/O command sent from the network controlling unit 111 to the disc controlling unit 112 is generated based on the data input/output request and file management information. The file management information is stored in the disc drive 115.

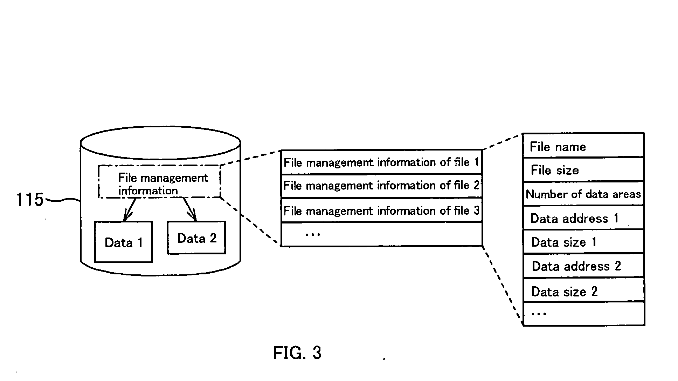

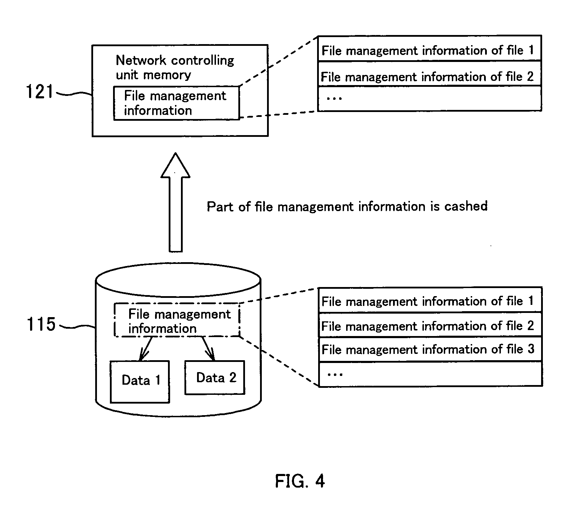

An example of the file management information is illustrated in Fig. 3. In the file management information, a file size which is a data size of a file, the number of data areas indicating the number of divisions in the case where the data corresponding to the file name is divided for each of a plurality of storage areas and stored therein, and a data address and a data size for specifying each storage position on the disc drive 115, which is a continuous area, are set so as to correspond to the file name. Note that as illustrated in Fig. 4, the file management information is sometimes stored, i.e., cached in the network controlling unit memory 121 to improve data processing performance.

### (I/O command)

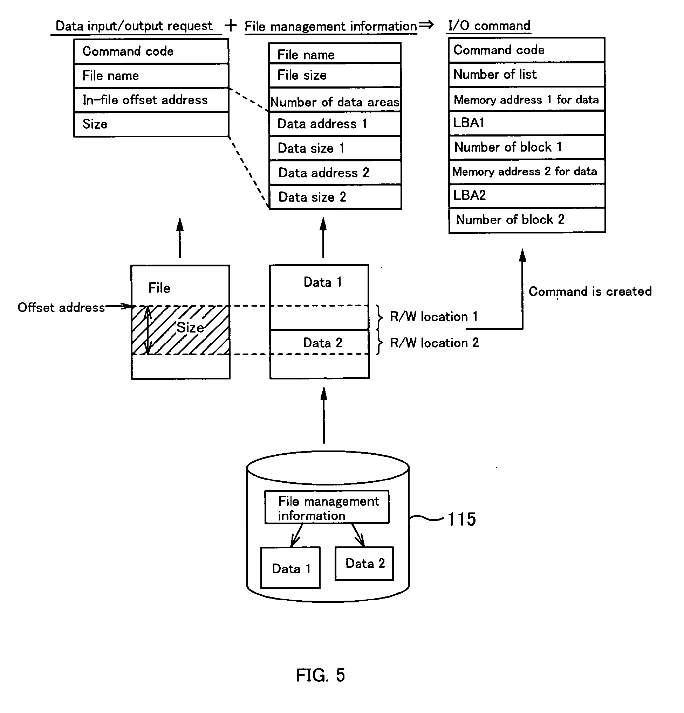

Fig. 5 explains a method for generating the I/O command based on the data input/output request. First, the network controlling unit 111 compares the in-file offset address of the data input/output request with the file management information, and acquires the data size and the data address corresponding to the storage location of the data on the disc drive 115, the data being related to the file to be processed depending on the data input/output request. As described above, the data corresponding to one file is sometimes stored in a continuous storage area collectively on the disc drive 115, or alternatively sometimes stored in the plurality of storage areas separately therein. Fig. 5 illustrates the case where the data corresponding to one file is stored in two storage areas separately.

When the file to be processed depending on the data input/output request is stored in the continuous storage area collectively on the disc drive 115, as the I/O command corresponding to the data input/output request, the network controlling unit 111 generates an I/O command for designating the storage area, in which one logical block address (LBA) and the number of blocks are set. Herein, the logical block address means a logical address for designating the storage location of the data in the logical area, which is organized in the disc space of the disc drive, (hereinafter, referred to as a logical unit or LU).

On the other hand, when the file to be processed depending on the data input/output request is divided and stored in the plurality of storage areas of the disc drive 115, the network controlling unit 111 generates the I/O command in which the combination of the number of the blocks and the plurality of logical addresses for designating the respective divided storage areas is set. In this case, the number of the divisions indicating how many storage areas the file is divided is set in the column for the number of the lists.

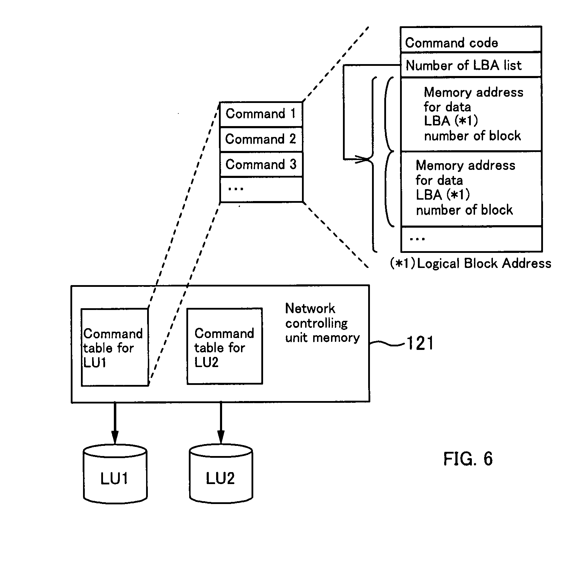

Fig. 6 illustrates the way to store the generated I/O command in the network controlling unit memory 112. Note that though the I/O command is managed in each command table prepared for each LU on the network controlling unit memory 121 in this figure, the style of storing the I/O command in the network controlling unit memory 112 is not limited to the configuration in Fig. 6.

### (Generation of I/O command)

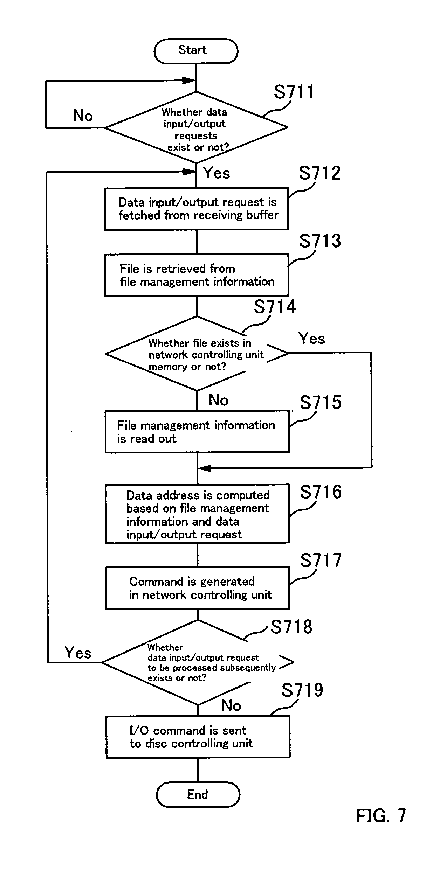

Procedures of the network controlling unit 111 to generate the I/O command based on the data input/output request will be described along with the flowchart illustrated in Fig. 7.

When the data input/output requests exist in the receiving buffer (S711), the network controlling unit 111 fetches out the data input/output request from the receiving buffer by one (S712), and retrieves a file, which corresponds to the file name set in the data input/output request, from the file management information of the network controlling unit memory 121 (S713).

Herein, when the file corresponding to the file name exists in the file management information in the network controlling unit memory 121 (YES in S714), the procedure advances to S716. On the other hand, when no file corresponding to the file name exists in the file management information (NO in S714), the network controlling unit 111 reads out the file management information from the disc drive 115 (S715).

In S716, the network controlling unit 111 acquires a data address of the disc drive 115 and a data size thereof, which correspond to the offset address of the data input/output request and the data size thereof. Herein, when the data constituting the file is divided and stored separately in the plurality of storage areas on the disc drive 115 as described above, the network controlling unit 111 acquires data addresses and data sizes corresponding to the respective storage areas. Then, the network controlling unit 111 generates an I/O command, in which the computed data address and data size are set, on the network controlling unit memory 121 (S717).

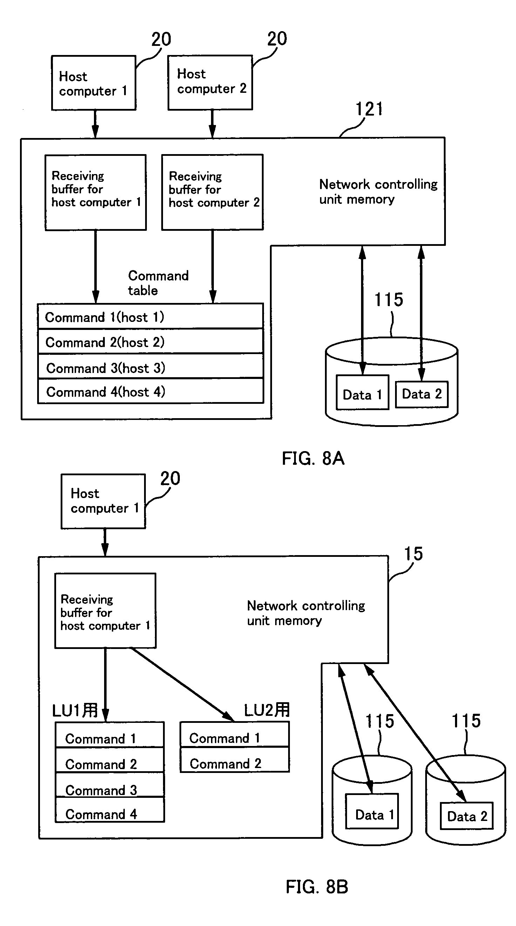

A way to generate the I/O command on the network controlling unit memory 121 is illustrated in Figs. 8A and 8B. Fig. 8A illustrates the way to generate the I/O command in the case where the I/O command as to one logical volume from each of the plurality of host computers 20 is generated. Fig. 8B illustrates the way to generate the I/O command in the case where one host computer 20 accesses a plurality of logical volumes.

In S718 of Fig. 7, the network controlling unit 111 examines in the receiving buffer whether a data input/output request to be processed subsequently exists. When a receiving buffer of another host computer 20 exists, the steps from S712 are iterated.

On the other hand, when the data input/output request to be processed subsequently does not exist in the receiving buffer (NO in S718), the network controlling unit 111 sends a request for executing the I/O command to the disc controlling unit 112 at an appropriate timing (S719).

Note that the processing of S719 may be executed without waiting the processing of S718. When there are the plurality of receiving buffers, the above steps are executed for each receiving buffer (S719).

### (Execution of I/O command)

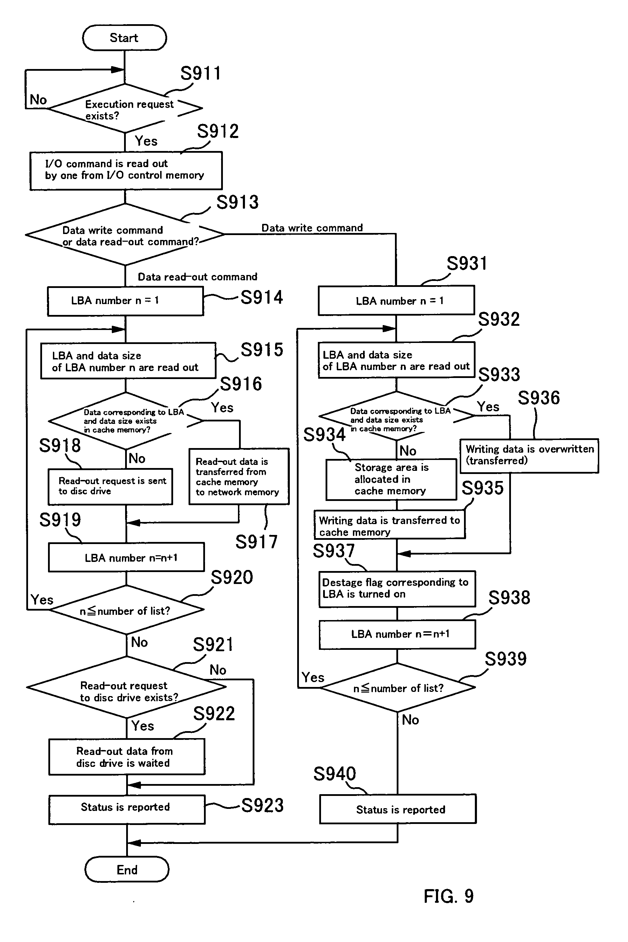

Next, an execution of the I/O command by the disc controlling unit 112 will be described along with the flowchart illustrated in Fig. 9.

The disc controlling unit 112 stores the execution request for the I/O commands, which has been received from the network controlling unit 111, in its disc controlling unit memory 122. The disc controlling unit 112 monitors whether the execution request for the I/O commands exists in the disc controlling unit memory 122 (S911). When the execution request for the I/O commands exists in the disc controlling unit memory 122, the disc controlling unit 112 reads out the I/O command by one from the disc controlling unit memory 122 (S912), and examines whether command is a data write command or a data read-out command (S913). Herein, when the command is the read-out command, the procedure advances to S914. On the other hand, when the command is the write command, the procedure advances to S931.

In S914, it is assumed that a LBA number n is set to one as an initial value. The disc controlling unit 112 reads out LBA accompanying the set LBA number and the data size (S915). Subsequently, the disc controlling unit 112 examines whether data corresponding to the LBA and the data size exists in the cache memory 114 (S916). If the data corresponding to the LBA and the data size exists therein (YES in S916), the disc controlling unit 112 reads out this data from the cache memory 114 to transfer the read out data to the network memory (S917). On the other hand, if the data does not exist in the cache memory 114, the disc controlling unit 112 sends a read-out request to the disc drive 115 (S918). Next, the disc controlling unit 112 increments the LBA number n (S919), and compares the value of the LBA number after being incremented with the number of the lists of the I/O command (S920). Herein, when the LBA number n is equal to the number of the lists or less (YES in S920), the procedure advances to S915. On the other hand, when the LBA number n is larger than the number of the lists (NO in S920), the procedure advances to S921.

In S921, when the disc controlling unit 112 sends the read-out request in S918 (YES in S921), the procedure advances to S923 (S922) after the disc drive 115 reads out data corresponding to the read-out request. On the other hand, in S918, when the disc controlling unit 112 does not send the read-out request in S918, the procedure advances to S923.

In S923, when the data is read out from the disc drive 115, the disc controlling unit 112 stores the read-out data in the cache memory 114 and transfers this data to the network controlling unit memory 121. The disc controlling unit 112 reports to the network controlling unit 111 a status to the effect that the processing relating to the data input/output request has been completed.

On the other hand, in S913, if the I/O command is the data write request, the procedure advances to S931. In S931, it is assumed that the LBA number n is set to one as the initial value. In S932, the disc controlling unit 112 reads out the LBA accompanying the LBA number n and the data size.

Next, the disc controlling unit 112 examines whether the data corresponding to the LBA and the data size exists in the cache memory 114 (S933), and when the data corresponding to the LBA and the data size does not exist in the cache memory 114 (NO in S933), the disc controlling unit 112 allocates the storage area in the cache memory 114 (S934), and writes the writing data in the storage area (S935).

On the other hand, when the data corresponding to the LBA and the data size exists in the cache memory (YES in S933), the disc controlling unit 112 overwrites the write data on this data (S936).

In S937, the disc controlling unit turns on a destage flag as to the write data stored in the cache memory so as to correspond to this write data. The write data for which the destage flag is turned on is destaged from the cache memory 114 to the disc drive 115 at an appropriate timing.

Subsequently, the disc controlling unit 112 increments the LBA number n (S938), and compares the LBA number n after being incremented with a value set as the number of the lists of the I/O command (S939). Herein, when the LBA number n is equal to the number of the lists or less (YES in S939), the procedure advances to S932. When the LBA number n is larger than the number of the lists (NO in S939), the procedure advances to S940, and the disc controlling unit 112 reports, to the network controlling unit 111a, status to the effect that the processing as to the data input/output request has been completed (S940).

As described above, only by sending one command, for which the plurality of addresses are set, from the network controlling unit 111 to the disc controlling unit 112, the disc controlling unit 112 executes the data input/output corresponding to the plurality of addresses for the disc drive 115. Therefore, an overhead spent for the processing of the command is reduced, and performance of the storage system is improved.

### (Backup Processing)

Next, a data backup processing which the disc controller 10 executes in response to a backup request sent from the host computer 20 will be described.

On the operating system operating the network controlling unit 111, a backup program, which executes processing for storing data stored in the disc drive 115 in a backup media of the backup device 184 illustrated in Fig. 1 when the disc controller 10 receives the backup request sent from the host computer 20, operates.

For the backup request, data to be backed up is designated by information such as a file name and a logical unit name. When the disc controller 10 receives the backup request, the backup program acquires a data size and an address for specifying a storage location on the disc drive 115 where the data to be backed up is stored, based on information specified for the backup request, and sends a command for instructing the backup, in which the address and the data size are set, to the disc controlling unit 112 through the internal bus 30.

Upon receipt of the command for instructing the backup, the disc controlling unit 112 sends the data stored in the storage area designated by the address and the data size, which are set in this command, and a backup starting command for instructing a start of the backup to the backup device 184. The backup device 184 which has received the backup starting command records the data to be backed up in the backup media, the data being sent together with the backup starting command.

When the disc controlling unit 112 receives from the backup device 184 a notice to the effect that recording of the data to be backed up onto the backup media has been completed, the disc controlling unit 112 sends a completion notice to the backup program through the internal bus 30. Upon receipt of the completion notice, the backup program sends a backup completion report to the host computer 20.

Incidentally, the backup device 184 is generally configured to be coupled to a server computer through a Fibre Channel. In this case, the server computer is required to perform a data transfer from a disc controller to the backup device through a Fibre Channel.

However, in the structure that the network controlling unit 111 and the disc controlling unit 112 are coupled by the internal bus 30 as in this embodiment, it is possible to start the backup by the disc controlling unit 112 only by sending the command for instructing the backup from the network controlling unit 111 to the disc controlling unit 112. With this structure, the data to be backed up is directly transferred from the disc controlling unit 112 to the backup device 184, and a load applied to the network controlling unit 111 during the backup is significantly reduced. Furthermore, since the communication is performed through the internal bus, high speed processing of the disc controller 10 can be achieved.

### (Plural Circuit Boards)

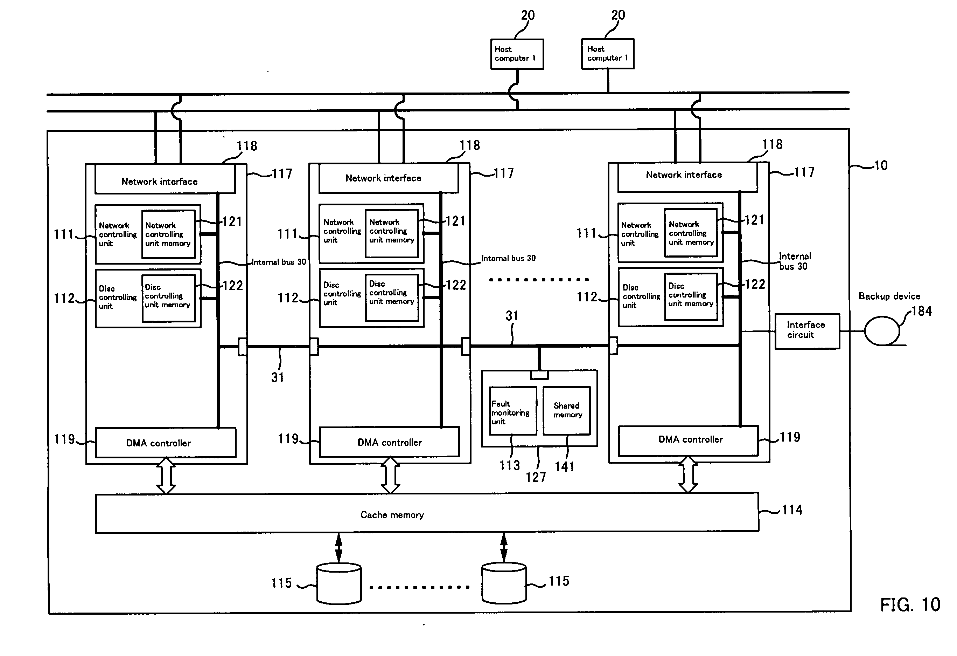

Mounting of a plurality of circuit boards having the same function on the disc controller 10 has been carried out to aim at a fail-over to be performed, or the like. However, it is also possible to mount the plurality of circuit boards, in which the network controlling unit 111 and the disc controlling unit 112 are formed, on one disc controller 10. Fig. 10 illustrates a storage system constructed by use of the disc controller 10 in which the plurality of circuit boards are mounted.

In Fig. 10, a network interface 118, a network controlling unit 111, a disc controlling unit 112 and a DMA controller 119 are formed on each circuit board 117. These constituent components are coupled to respective internal buses 30 such as a PCI bus. The internal buses 30 in each circuit board 117 are coupled to each other.

A circuit board 127 in which a fault monitoring unit 113 and a shared memory 141 are formed is mounted on the disc controller 10 separately from each circuit board 117. Note that also the fault monitoring unit 113 and the shared memory 141, which are formed in the circuit board 127, are coupled to the internal buses 30 through a coupling line 31.

Herein, in the disc controller 10 having the such structure, it is possible to realize a fail-over system by exchanging heartbeat messages among the network controlling units 111 formed in the respective circuit boards 117 to monitor operation states thereof.

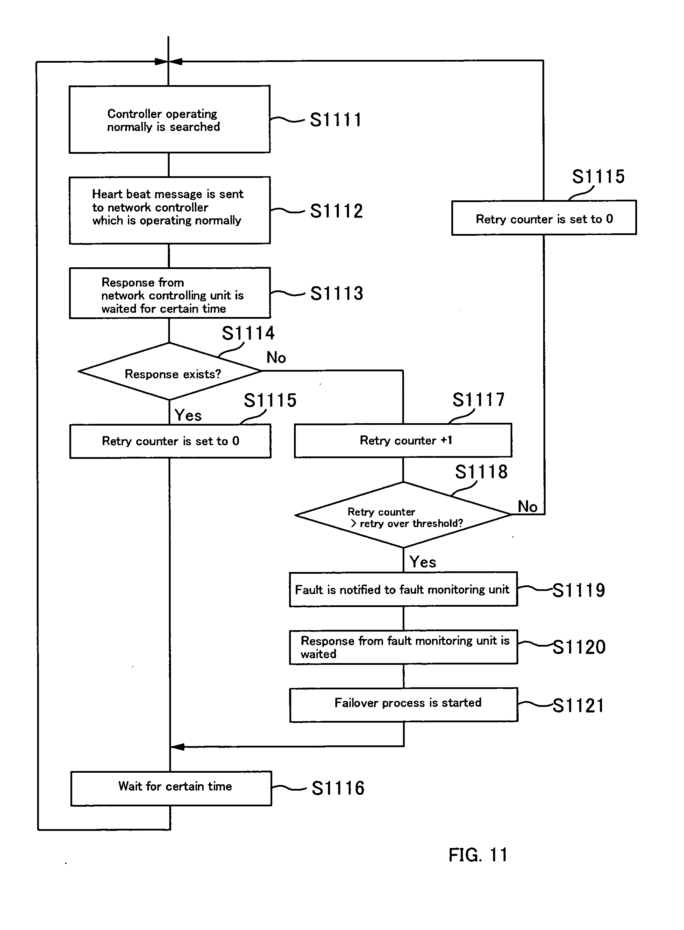

This fail-over system will be described by use of the flowcharts illustrated in Figs. 11 to 13 below.

First, status information relating to the operation state of network controlling unit 111 in each circuit board shall be stored in the shared memory 141. Note that the status information relating to the operation state is, for example, the one indicating whether the network controlling unit 111 normally operates.

The status information is written into the shared memory 141 through the internal bus 30 by the network controlling unit 111 of each circuit board 117 at a predetermined timing, e.g., regularly, irregularly or the like. The fault monitoring unit 113 sometimes inquires the operation state from each network controlling unit 111 through the internal bus 30, and writes into the shared memory the operation state of each network controlling unit 111, which has been acquired in response to the inquiry, through the internal bus 30 indirectly.

Fig. 11 is a flowchart for explaining processing of the network controlling unit 111 of a certain circuit board 117 in the case where the network controlling unit 111 operates as a unit which requests a heart beat message from a network controlling unit 111 of one of other circuit boards 117.

The network controlling unit 111 which operates as the prescribed unit examines the status information by accessing the shared memory 141 through the internal bus 30, and researches another network controlling unit 111 which is operating normally (S1111). Then, when another network controlling unit 111 which is operating normally is searched, the network controlling unit 111 which operates as the prescribed unit sends a message to request the heartbeat message to the searched network controlling unit 111 through the internal bus 30 (S1112), and waits the heartbeat message to be sent from the searched network controlling unit 111 for a certain time (S1113).

Herein, in the case where the heartbeat message is sent from another network controlling unit which is operating normally (YES in S1114), the network controlling unit which operates as the prescribed unit sets a retry counter to "0" (S1115), and waits for a certain time (S1116). Thereafter, the procedure returns to the processing from S1111 again.

On the other hand, in S1114, when the heartbeat message can not be received from another network controlling unit 111 (NO in S1114), the network controlling unit which operates as the prescribed unit adds "1" to the retry counter (S1117), and compares the retry counter with a retry over threshold value which has been previously set (S1118).

Herein, when the value of the retry counter exceeds the retry over threshold value (YES in S1118), the network controlling unit 111 which operates as the prescribed unit sends to the fault monitoring unit 113 through the internal bus 30 a message to the effect that faults have occurred in another network controlling unit 111 (S1119).

Note that information relating to the faults, which includes information indicating whether the faults are caused by hardware or software, information notifying that the transmission of the heartbeat message from another network controlling unit 111 is interrupted, and the like, is appended to this message. When the response to this message is sent from the fault monitoring unit 113, the network controlling unit 111 starts a fail-over processing for standing in for another network controlling unit 111 (S1121).

On the other hand, in the processing of S1118, when the value of the retry counter is below the retry over threshold value (NO in S1118), the network controlling unit 111 sets the retry counter to "0" (S1115), and the procedure returns to S1111 again.

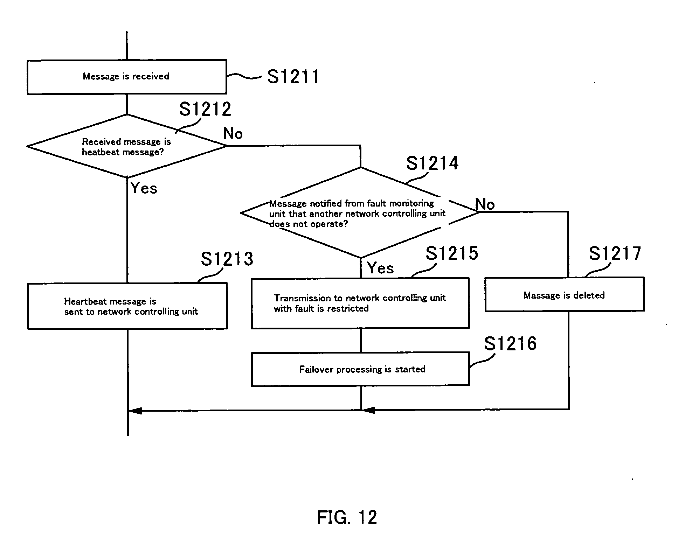

Fig. 12 is a flowchart for explaining processing in the case where the network controlling unit 111 of a certain circuit board 117 receives the heartbeat message or receives a message from the fault monitoring unit 113.

Upon receipt of the message sent through the internal bus 30, the network controlling unit 111 examines whether the message is the heartbeat message (S1212).

Herein, when the received message is the heartbeat message (YES in S1212), the network controlling unit 111 sends the heartbeat message to a network controlling unit 111 that has sent the heartbeat message (S1213).

On the other hand, when the received message is a message except the heartbeat message (YES in S1212), the network controlling unit 111 examines whether the sent message is a message sent from the fault monitoring unit 113, the message notifying that another network controlling unit 111 does not operate (S1214).

In S1214, when the message is the message sent from the fault monitoring unit 113, the message notifying that another network controlling unit 111 does not operate (YES in S1214), the network controlling unit 111 restricts the transmission to the corresponding network controlling unit 111 (S1215), and starts the fail-over processing relating to another network controlling unit 111 if necessary (S1216).

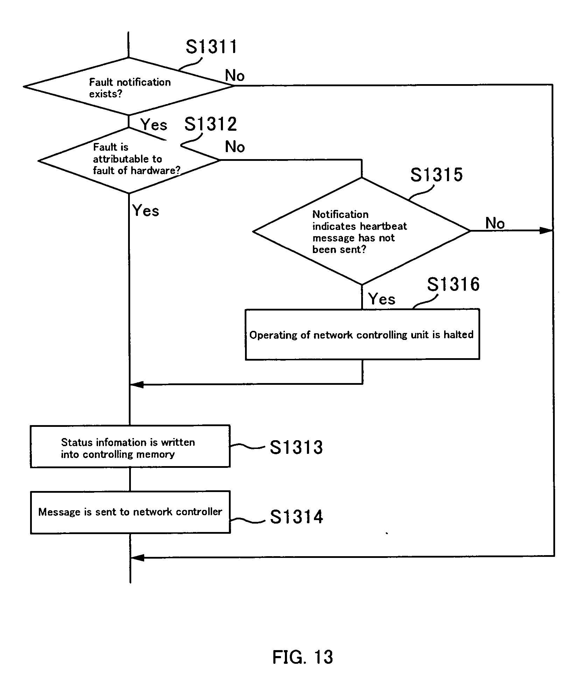

Fig. 13 is a flowchart for explaining the processing of the fault controlling unit 113. Upon receipt of the notification of S1119 in Fig. 11, that is, the message to the effect that the faults have occurred in a certain network controlling unit 111 (YES in S1311), the fault controlling unit 113 judges based on information appended to the message whether the fault notification is attributable to fault of hardware (S1312).

In S1312, when it is judged that the fault is attributable to the hardware (YES in S1312), the fault controlling unit 113 writes to the shared memory 141 status information to the effect that a network controlling unit 111 specified by the message is not operating or the like (S1313). Then, the fault monitoring unit 113 sends, to a network controlling unit 111 in which no faults have occurred, a message describing that the faults have occurred in the network controlling unit 111 specified by the foregoing message (S1314).

On the other hand, in S1312, when it is judged that the fault is not attributable to the hardware (NO in S1312), the fault monitoring unit 113 examines whether the received message is a message notifying that the heartbeat message is not yet sent from the network controlling unit 111 (S1315). When the received message is the message notifying that the heartbeat message is not yet sent from the network controlling unit 111, the fault monitoring unit 113 controls the network controlling unit 111 through the internal bus 30, and allows the network controlling unit 111 to halt its operation (S1316). Thereafter, the fault monitoring unit 113 proceeds with further steps from S1313.

In the above described manners, the fail-over system can be realized. Incidentally, when the heartbeat message is sent through LAN, the communication for the heartbeat message applies a load onto the LAN. If it is tried to avoid this load, a LAN exclusively used for the heartbeat message must be provided. When a mechanism to send the heartbeat message by the internal bus 30 is adopted, there is advantages that such problem and inconvenience do not occur at all.

### (Fault monitoring)

The plurality of network controlling units 111 and the plurality of disc controlling units 112 are sometimes mounted on the disc controller 10 aiming at improvements of processing capability and availability.

In such case, by forming the plurality of network controlling units 111 and the plurality of disc controlling units 112 on the same circuit board 140, it is possible to improve processing capability and reliability. Note that the shared memory 141 which the network controlling unit 111 and the disc controlling unit 112 can access together is formed in the circuit board 140.

A storage area for storing time information written by the network controlling unit 111 and the disc controlling unit 112 (hereinafter, referred to as a timer table through the internal bus 30) is allocated in the shared memory 141. Information relating to operation states of the network controlling unit 111 and the disc controlling unit 112 is set in the timer table. Herein, a time at which writing is performed is written in the timer table as operation state information. Moreover, the network controlling unit 111 and the disc controlling unit 112 write into the timer table at a timing set for fault monitoring (for example, at one-second intervals).

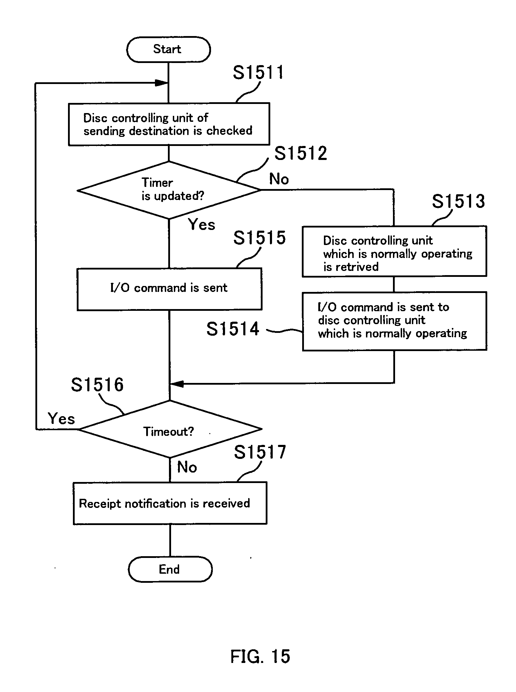

Fig. 15 is a flowchart for explaining a mechanism of a fault detection performed by the network controlling unit 111 when the network controlling unit 111 sends an I/O command to the disc controlling unit 112.

When the network controlling unit 111 sends the I/O command to the disc controlling unit 112, the network controlling unit 111 refers to the timer table in advance and investigates whether the disc controlling unit 112 that is a destination of the I/O command is normally operating (S1511, S1512). Note that this investigation is performed by investigating whether an update of the timer table was being performed within predetermined seconds immediately before the sending of the I/O command.

When it is proved that the update of the timer table corresponding to the disc controlling unit 112 to which the network controlling unit 111 intends to send the I/O command is not updated i.e., when the disc controlling unit 112 is not normally operating (NO in S1512), the network controlling unit 111 interrupts its processing, and reports occurrence of an error to the host computer 20. Then, the network controlling unit 111 retrieves a disc controlling unit 112 which is normally operating (S1513), and tries to send the I/O command to this retrieved disc controlling unit 112 (S1514).

On the other hand, in S1512, when it is proved that the update of the timer table is performed for the disc controlling unit 112 to which the network controlling unit 111 intends to send the I/O command, i.e., when the disc controlling unit 112 is normally operating (YES in S1512), the network controlling unit 111 sends the I/O command to the disc controlling unit 112 (S1515).

Herein, though the network controlling unit 111 judges based on the investigation that the disc controlling unit 112, which is the transmission destination of the I/O command, is normally operating (YES in S1512) and sends the I/O command to the disc controlling unit 112 (S1514, S1515), the I/O command may not received by the disc controlling unit 112, which is the transmission destination of the I/O command, and a time-out may occur. However, there is a possibility that faults have occurred in the disc controlling unit 112 after the sending of the I/O command, and, in this case, the procedure advances to S1511.

On the other hand, in S1516, when the time-out does not occur and the network controlling unit 111 receives a notification of a receipt of the I/O command, the procedure is completed (S1517).

According to the foregoing mechanism of the fault monitoring, it becomes possible to deliver the I/O command from the network controlling unit 111 to the disc controlling unit 112 surely, and to increase reliability of the storage system.

### (Fault monitoring Unit)

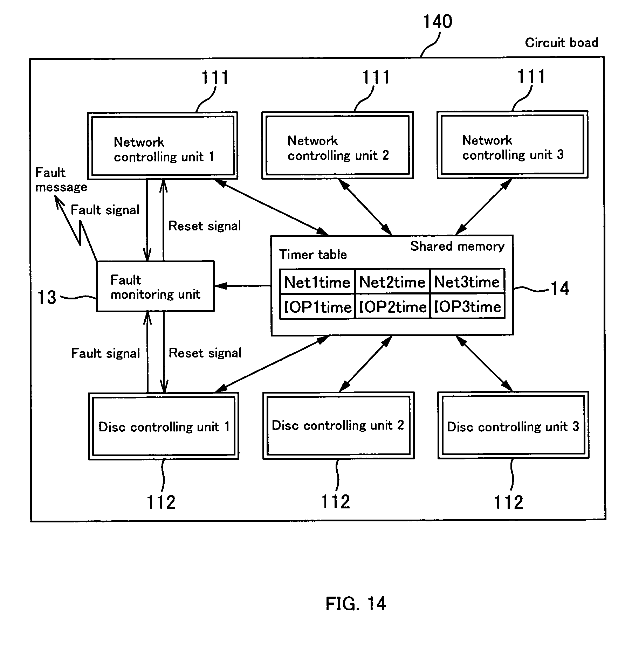

Incidentally, the fault monitoring unit 13 for monitoring whether the times of the timer tables corresponding to the respective network controlling units 111 and the disc controlling units 112 are updated is formed in the circuit board 140 illustrated in foregoing Fig. 14. The fault monitoring unit 13 detects, for example, the network controlling unit 111 or the disc controlling unit 112 which does not perform the time update for a certain time period, and notifies occurrence of faults of an external device and a user interface according to SNMP.

Furthermore, when the fault monitoring unit 13 judges that the cause that the time is not updated is attributable to faults of firmware of the network controlling unit 111 or the disc controlling unit 112, the fault monitoring unit 13 sends a reset signal, for example, a power-on reset signal, to the network controlling unit 111 and the disc controlling unit 112 through the internal bus 30. Furthermore, the fault monitoring unit 13 recognizes the occurrence of the faults in the network controlling unit 111 and the disc controlling unit 112 also by notifications from the network controlling unit 111 or the disc controlling unit 112 sent through the internal bus 30.

As described above, since the network controlling unit 111, the disc controlling unit 112, the shared memory 141 and the fault monitoring unit 13 are formed on the same circuit board, the whole processing including writing of a time to the timer table of the shared memory 141 from the network controlling unit 111 or the disc controlling unit 112, the reference of the timer table by the network controlling unit 111, monitoring of the time update state of the timer table by the fault monitoring unit 13, and the sending of the reset signal to the network controlling unit 111 or the disc controlling unit 112 are performed through the internal bus 30. Accordingly, these processes are performed at a high speed with high reliability, and a high and reliability speed processing of the disc controller 10 can be achieved.

Although the descriptions of the disc controller according to the present invention were made, the foregoing embodiment of the present invention is for facilitating understanding of the present invention, and does not limit the present invention. The present invention can be modified and improved without departing from the scope of the present invention, and, as a matter of course, the present invention includes its equivalents.

Although the preferred embodiment of the present invention has been described in detail, it should be understood that various changes, substitutions and alternations can be made therein without departing from spirit and scope of the inventions as defined by the appended claims.

## Claims

1. A disc controller comprising:
a network controlling unit for receiving a data input/output request sent from an external device through a network; and
a disc controlling unit formed in the same circuit board in which the network controlling unit is formed, the disc controlling unit coupled to the network controlling unit by an internal bus provided in the circuit board,
wherein the disc controlling unit receives a command sent from the network controlling unit through the internal bus and executes a data input/output for a disc drive in response to the command;
the network controlling unit sends the command, for which a plurality of addresses are set, to the disc controlling unit; and
the disc controlling unit receives the command and executes data input/output corresponding to each of the addresses set in the command for the disc drive.

2. A disc controller according to claim 1,
wherein a file system operates in the network controlling unit,
the data input/output request designates data, which is input/output to/from the disc drive, based on a file name, and
the network controlling unit generates an address corresponding to a storage location of data on the disc drive, which corresponds to the file name set for the data input/output request, and sets the address in the command.

3. A disc controller according to claim 1,
wherein the address is a logical address for designating a storage location of data in a logical area organized in a disc space of the disc drive.

4. A disc controller according to claim 1,
wherein the internal bus is a PCI bus.

5. A disc controller according to claim 1,
wherein the network controlling unit includes a communicating section communicating with the external device in accordance with a network protocol.

6. A disc controller according to claim 1,
wherein a memory accessible in a sharing manner by both the network controlling unit and the disc controlling unit is formed in the circuit board;
the network controlling unit and the disc controlling unit update, at a predetermined timing, operation state information indicating each of operation states of the network controlling unit and the disc controlling unit, which is stored in the memory; and
an occurrence of faults in the network controlling unit and disc controlling unit is detected based on the operation state information.

7. A disc controller according to claim 6,
wherein the network controlling unit acquires, from the operation state information, an operation state of the disc controlling unit which is a sending destination of the command when the network controlling unit sends the command to the disc controlling unit, and determines, depending on the acquired operation state, whether the command should be sent to the disc controlling unit.

8. A disc controller according to claim 6,
wherein the network controlling unit investigates the operation state of the disc controlling unit which is a sending destination of the command based on the operation state information when the network controlling unit can not acquire a receipt notification concerning the command sent to the disc controlling unit, and determines, depending on a investigation result thereof, whether the command should be sent to the disc controlling unit again.

9. A disc controlling unit according to claim 6,
wherein the network controlling unit investigates the operation state of the disc controlling unit which is a sending destination of the command based on the operation state information when the network controlling unit can not acquire a receipt notification concerning the command sent to the disc controlling unit, and when the network controlling unit judges that the disc controlling unit is not normally operating, the network controlling unit sends the command to at least one of other disc controlling units.

10. A disc controller according to claim 6, further comprising:
a user interface for notifying the occurrence of the faults when the occurrence of the faults is detected.

11. A disc controller according to claim 6,
wherein when the occurrence of the faults is detected, a signal for requesting a restart is sent to one of the network controlling unit and the disc controlling unit where the faults have occurred.

12. A disc controller according to claim 1,
wherein the disc controlling unit includes an interface for connecting a backup device thereto;
the network controlling unit includes a section for receiving a backup request concerning the data stored in the disc drive from the external device, and for sending a backup command to the disc controlling unit; and
the disc controlling unit includes a section for sending a backup instruction concerning the data stored in the disc drive to the backup device upon receipt of the backup command.

13. A disc controller comprising:
a network controlling unit for receiving a data input/output request sent through a network; and
a disc controlling unit formed in the same circuit board in which the network controlling unit is formed, the disc controlling unit being coupled to the network controlling unit by an internal bus provided in the circuit board, receiving a command sent from the network controlling unit through the internal bus, and inputting/outputting data to/from a disc drive in response to the command,
wherein the plurality of circuit boards connected so as to be capable of communicating with each other are provided;
an occurrence of faults of one of the circuit boards is detected by one of the other circuit boards by exchanging a heartbeat message among the circuit boards; and
when the occurrence of the faults of one circuit board is detected by one of the other circuit boards, the circuit board different from the circuit board causing the faults stands for a processing of the circuit board causing the faults.

14. A controlling method of a disc controller having a network controlling unit for receiving a data input/output request sent from an external device through a network; and a disc controlling unit formed in the same circuit board in which the network controlling unit is formed, the disc controlling unit being connected to the network controlling unit by an internal bus provided in the circuit board, receiving a command sent from the network controlling unit through the internal bus, and inputting/outputting data to/from a disc drive in response to the command,
the method comprising:
by means of the network controlling unit sending one command, for which a plurality of addresses are set, to the disc controlling unit; and
by means of the disc controlling unit receiving the command and executing data input/output corresponding to each of the addresses set in this command for the disc drive.

15. A method according to claim 14,
wherein the disc controlling unit includes a memory accessible in a sharing manner by both the network controlling unit and the disc controlling unit;
the network controlling unit and the disc controlling unit update, at a predetermined timing, operation state information indicating each of operation states of the network controlling unit and the disc controlling unit, which is stored in the memory; and
an occurrence of faults in the network controlling unit and disc controlling unit is detected based on the operation state information.

16. A method according to claim 14,
wherein the disc controlling unit includes an interface for connecting the external device thereto;
the network controlling unit receives a backup request concerning data stored in the disc drive from the external device, and sends a backup command to the disc controlling unit; and
the disc controlling unit sends the backup command concerning the data of the disc drive to the backup device upon receipt of the backup command.

17. A method according to claim 14,
wherein the disc controlling unit includes the plurality of circuit boards connected so as to be capable of communicating with each other;
an occurrence of faults of one circuit board is detected by one of the other circuit boards by exchanging a heartbeat message among the circuit boards; and
when one circuit board detects the faults, one of the other circuit boards different from the circuit board causing the faults stands for processing of the circuit board with the faults.
